# EUROPEAN PATENT APPLICATION

(11) **EP 1 491 498 A1**
(43) Date of publication of application: **29.12.2004**
(21) Application number: 03743068.3
(22) Date of filing: 28.02.2003
(51) Int. Cl.: C01B 33/00, C01G 23/04

(54) **TITANIA NANOSHEET ALIGNMENT THIN FILM, PROCESS FOR PRODUCING THE SAME AND ARTICLE INCLUDING THE TITANIA NANOSHEET ALIGNMENT THIN FILM**

(30) Priority: 28.02.2002 JP 2002053480
(71) Applicant: Japan Science and Technology Agency, Kawaguchi-shi, Saitama 332-0012 (JP)
(72) Inventor: MINAMI, Tsutomu, Sayama-shi, Osaka 589-0023 (JP); KOGURE, Toshihiro, Tsukuba-shi, Ibaraki 305-0844 (JP); TATSUMISAGO, Masahiro, Sakai-shi, Osaka 599-8126 (JP); TADANAGA, Kiyoharu, Sakai-shi, Osaka 590-0000 (JP); MATSUDA, Atsunori, Kawachinagano-shi, Osaka 586-0082 (JP)
(74) Representative: Calamita, Roberto
(86) International application number: PCT/JP2003/002339
(87) International publication number: WO 2003/072499

(57) **Abstract**

A titania nanosheet alignment thin film whose main components are silica and titania, wherein titania nanosheets of layer structure having a nanometer order size are dispersed on a surface thereof. The titania nanosheet alignment thin film not only exhibits high photocatalytic activity but also can maintain excellent ultrahydrophilic and anti-fogging properties for a prolonged period of time. Further, there are provided a process for producing the same and an article including the titania nanosheet alignment thin film.

## Description

### Technical Field

The invention of this application relates to a titania nanosheet alignment thin film, a process for producing the same, and an article including the titania nanosheet alignment thin film. More specifically, the invention of this application relates to a novel titania nanosheet alignment thin film which not only exhibits high photocatalytic activity but also can maintain excellent ultrahydrophilic and anti-fogging properties for a prolonged period of time, a process for producing the same, and an article including the titania nanosheet alignment thin film.

### Background Art

Conventionally, properties of titania such as a photocatalytic activity, ultrahydrophilic property and the like are paid to attention, and articles having wide functions such as purification, antimicrobial activity, stain-proofing and the like have been developed, using thin films containing titania such as a silica-titania (SiO₂-TiO₂) thin film and the like whose main components are silica and titania typically including a titania thin film, and already put into practical use. This titania includes three kinds of crystal bodies of anatase phase, rutile phase and brookite phase, and metastable phase, amorphous phase and the like, and it is know that, of them, titania of anatase phase shows the highest photocatalytic activity. Further, it is known that properties thereof such as photocatalytic activity and the like change since specific surface area varies also depending on the shape of titania.

Of the thin films containing titania, there are already some studies taking the crystal structure and shape of titania into consideration regarding a SiO₂-TiO₂ thin film. For example, Abe et al. have reported that, in a SiO₂-TiO₂ complex oxide produced using bisacetylacetonate titanium diisopropoxide or ethyl bisacetoacetate titanium diisopropoxide and silic acid, heat treatment at 500°C or more is necessary when this complex oxide contains TiO₂ in an amount of 94 mol % or more and heat treatment at 750°C or more is necessary when this complex oxide contains TiO₂ in an amount of 89 to 67 mol%, respectively, for converting titania into anatase phase, and that, when 50 mol% or more of TiO₂ is contained, TiO₂ of anatase phase cannot be obtained even by heat treatment at 1000°C and TiO₂ remains amorphous (Y. Abe, N. Sugimoto, Y. Nagano and T. Misono, J. Non-Cryst., 104 (1988) 164).

The inventors of this application have reported that titanium n-butoxide and silicon tetraethoxide are used as a starting material and hydrolyzed with dilute hydrochloric acid to give a solution from which a SiO₂-TiO₂ thin film containing 16.5 mol % of TiO₂ is formed, and this film is thermally treated at 350°C, then, exposed to water vapor of 100°C and about 1 atom, thus, TiO₂ of anatase type can be deposited as a fine crystal on the surface of a film (A. Matsuda, T. Kogure, Y. Matsuno, S. Katayama, T. Tsuno, N. Tohge and T. Minami, J. Am. Ceram. Soc., 76 (1993) 2899). Furthermore, there is also a suggestion that a SiO₂-TiO₂ gel film is treated under a mild condition of warm water to deposit an anatase phase titania fine crystal on the surface of the film, and the like (PCT/JP99/00477). As described above, it has been confirmed that a SiO₂-TiO₂ thin film carrying titania deposited as a fine crystal on the surface of the film has, due to its increased specific surface area of TiO₂, an enhanced photocatalytic activity higher than that of usual SiO₂-TiO₂ thin films.

On the other hand, Sasaki et al. have reported, regarding a single body of TiO₂, that various titanates are subjected to ion exchange and a exfoliation operation to obtain titania nanosheets of layer structure having a relatively large interlayer spacing of about 0.79 to 1.04 nm (T. Sasaki, M. Watanabe, Y. Michiue, Y. Komatsu, F. Izumi, S. Takenouchi, Chemistry of Materials, 7 (1995) 1001). This titania nanosheet has smaller size as compared with powdery TiO₂ and a shape controlled to have increased specific surface area, leading to a high photocatalytic activity, and the titania nanosheet forms a layer structure, therefore, there is an expectation for manifestation of some novel functions. However, utilization of this titania nanosheet for secondary articles has a problem of an expense for supporting this titania nanosheet on a base material.

The inventors of this application have succeeded to obtain a SiO₂-TiO₂ transparent thin film carrying titania fine crystals having an interlayer spacing of about 0.7 nm deposited on the surface of the film, by strictly controlling the composition of a SiO₂-TiO₂ gel film and treating this with warm water (Japanese Patent Application No. 2000-289528). The SiO₂-TiO₂ gel film obtained by this method is expected to manifest its application as that showing an excellent ultrahydrophilic property and photocatalytic activity. By realization of this SiO₂-TiO₂ transparent thin film carrying titania fine crystals deposited on its surface, realization of a SiO₂-TiO₂ gel film carrying titania nanosheets dispersed on its surface is also becoming desired. However, its realization is not attained yet, actually.

The invention of this application has been carried out in view of the circumstances as described above, and an object thereof is to provide a novel titania nanosheet alignment thin film which solves the above-mentioned conventional problems, exhibits a high photocatalytic activity, and additionally, can maintain excellent ultrahydrophilic and anti-fogging properties for a prolonged period of time, a process for producing the same, and an article including the titania nanosheet alignment thin film.

### DISCLOSURE OF THE INVENTION

The invention of this application provides inventions as described below for solving the above-mentioned problems.

Namely, in a first aspect, the invention of this application provides a titania nanosheet alignment thin film whose main components are silica and titania, wherein titania nanosheets of layer structure having a nanometer order size are dispersed on the surface thereof.

The invention of this application provides, in a second aspect, the above-mentioned titania nanosheet alignment thin film, wherein the interlayer spacing of the titania nanosheet is 0.6 to 0.85 nm, in a third aspect, the above-mentioned titania nanosheet alignment thin film, wherein the interlayer spacing of the titania nanosheet is 0.7 nm or around 0.7 nm, in a fourth aspect, the above-mentioned titania nanosheet alignment thin film, wherein the titania nanosheets are highly-dispersed on the whole surface, in a fifth aspect, the above-mentioned titania nanosheet alignment thin film, wherein the compounding ratio of silica to titania is SiO₂:TiO₂ = 5:1 to 1:3 in molar ratio, in a sixth aspect, the above-mentioned titania nanosheet alignment thin film, wherein the compounding ratio of silica to titania is SiO₂:TiO₂ = 3:1 in molar ratio, in a seventh aspect, the above-mentioned titania nanosheet alignment thin film, wherein the film shows an ultrahydrophilic property of a contact angle against water of 5° or less, in an eighth aspect, the above-mentioned titania nanosheet alignment thin film, wherein the film shows an anti-fogging property, in a ninth aspect, the above-mentioned titania nanosheet alignment thin film, wherein the contact angle against water is 10° or less after retention of 2000 hours in a dark place in air, and in a tenth aspect, the above-mentioned titania nanosheet alignment thin, wherein the film shows a photocatalytic activity. The invention of this application provides, in an eleventh aspect, an article including any of the above-mentioned titania nanosheet alignment thin films, and the like, as its embodiments.

On the other hand, the invention of this application provides, in a twelfth aspect, a process for producing a titania nanosheet alignment thin film, wherein from a solution containing a silicon alkoxide and a titanium compound having a hydrolysis property, a gel film containing a complex metal oxide or hydroxide of the titanium compound and silicon alkoxide is formed, and vibration warm water treatment of contacting warm water and applying vibration is performed on this gel film, to align and deposit titania nanosheets of layer structure having a nanometer order size on the surface thereof.

The invention of this application provides, in a thirteenth aspect, a process for producing a titania nanosheet alignment thin film, wherein from a solution containing a silicon alkoxide and a titanium compound having a hydrolysis property, a gel film containing a complex oxide or hydroxide of the titanium compound and silicon alkoxide is formed, and electric field warm water treatment of contacting warm water and applying voltage is performed on this gel film, to align and deposit titania nanosheets of layer structure having a nanometer order size on the surface thereof.

The invention of this application provides, in a fourteenth aspect, the above-mentioned process for producing a titania nanosheet alignment thin film, wherein the titanium compound having a hydrolysis property is a titanium alkoxide, in a fifteenth aspect, the above-mentioned process for producing a titania nanosheet alignment thin film, wherein the compounding ratio of the silicon alkoxide to the titanium compound is SiO₂:TiO₂ = 5:1 to 1:3 in molar ratio, in a sixteenth aspect, the above-mentioned process for producing a titania nanosheet alignment thin film, wherein the compounding ratio of the silicon alkoxide to the titanium compound is SiO₂:TiO₂ = 3:1 in molar ratio, in a seventeenth aspect, the above-mentioned process for producing a titania nanosheet alignment thin film, wherein the gel film is formed on a base plate, in an eighteenth aspect, the above-mentioned process for producing a titania nanosheet alignment thin film, wherein the gel film is contacted with warm water while imparting continuous vibration to the gel film, in a nineteenth aspect, the above-mentioned process for producing a titania nanosheet alignment thin film, wherein vibration is imparted along the normal line direction on the surface of the gel film, in a twentieth aspect, the above-mentioned process for producing a titania nanosheet alignment thin film, wherein vibration is imparted at a rate of 30 mm/second or more, in a twenty first aspect, the above-mentioned process for producing a titania nanosheet alignment thin film, wherein vibration of 5 to 10 Hz is imparted at an amplitude of 2.5 mm, in a twenty second aspect, the above-mentioned process for producing a titania nanosheet alignment thin film, wherein the electric field warm water treatment is performed while applying direct current voltage, in a twenty third aspect, the above-mentioned process for producing a titania nanosheet alignment thin film, wherein warm water of 90°C is used for the warm water treatment, and in a twenty fourth aspect, the above-mentioned process for producing a titania nanosheet alignment thin film, wherein the warm water treatment is performed for 2 hours or more.

### BRIEF EXPLANATION OF DRAWINGS

Fig. 1 is a sectional view schematically exemplifying a titania nanosheet alignment thin film of the invention of this application.
Fig. 2 is a photograph exemplifying the result of observation of a titania nanosheet alignment thin film of the invention of this application produced in Example 1, from the perspective direction of the section by a scanning electron microscope (SEM).
Fig. 3 is a photograph exemplifying an image by a high resolution transmission electron microscope (HRTEM) of the section of a titania nanosheet alignment thin film of the invention of this application produced in Example 1.
Fig. 4 shows a photograph (a) exemplifying an image by a high resolution transmission electron microscope (HRTEM) of a titania nanosheet alignment thin film of the invention of this application produced in Example 1, and a photograph (b) exemplifying the results of analysis of lattice stripes of the image (a) via Fourier transformation.
Figs. 5 (a), (b) are photographs exemplifying images by a high resolution transmission electron microscope (HRTEM) of a titania nanosheet alignment thin film of the invention of this application produced in Example 1.
Fig. 6 is a graph exemplifying change with the lapse of time of water contact angle of (A) a titania nanosheet alignment thin film of the invention of this application, (B) a titania nano fine crystal dispersed thin film and (C) an anatase phase titania crystal thin film.
Fig. 7 is a graph exemplifying the photo-resolution ability of (A) a titania nanosheet alignment thin film of the invention of this application, (B) a titania nano fine crystal dispersed thin film and (C) an anatase phase titania crystal thin film.
Fig. 8 is a schematic view exemplifying a method of electric field warm water treatment in Example 3.
Fig. 9 is a view exemplifying the result of observation by a scanning electron microscope (SEM) of a titania nanosheet alignment thin film produced on the negative electrode side in Example 3.

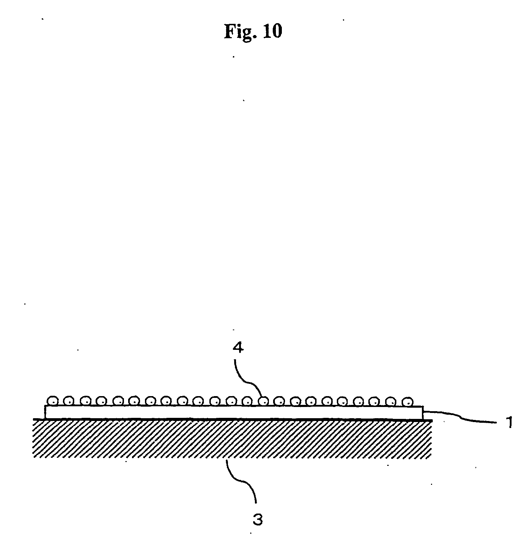

Fig. 10 is a sectional view showing schematically the constitution of a conventional titania fine crystal dispersed thin film.

Marks in drawings have the following meanings.
1 titania nanosheet alignment thin film
2 titania nanosheet
3 base material
4 titania nano fine crystal

### BEST MODE FOR CARRYING OUT THE INVENTION

The invention of this application has features as described above, and embodiments thereof will be described below.

The titania nanosheet alignment thin film provided by the invention of this application is a thin film whose main components are silica and titania, wherein titania nanosheets of layer structure having a nanometer order size are dispersed on the surface thereof.

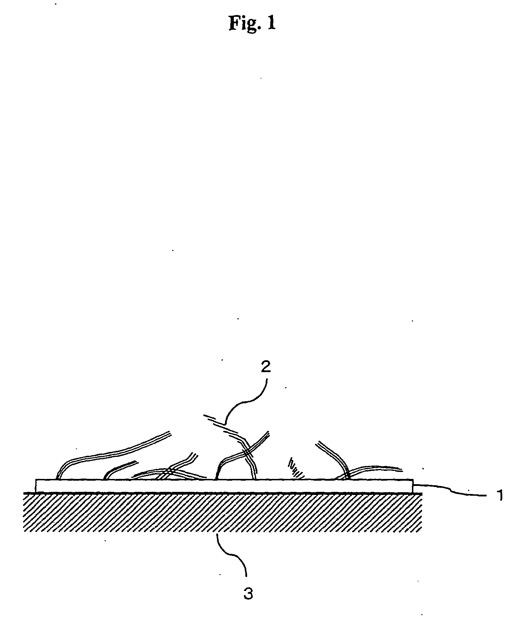

The titania nanosheet alignment thin film of the invention of this application is schematically exemplified in Fig. 1. The titania nanosheet alignment thin film (1) is a thin film (1) whose main components are silica and titania, and realized by dispersion of titania nanosheets (2) on the surface of the thin film (1).

In such titania nanosheets (2), titania nanosheets in the form of platelet or sheet each having a size of about 5 to 50 nm form a layer structure having a thickness of about 1 to 20 nm totally in a nanometer order size of several nm to several 100 nm.

The titania nanosheet alignment thin film (1) of the invention of this application can be characterized in that the interlayer spacing of the titania nanosheet (2) is about 0.5 to 1.0 nm, typically, 0.7 nm or around 0.7 nm.

As shown in Table 1, titania nanosheets can be described generally as HₓTiO_{y}·zH₂O, and these titania nanosheets can be characterized by interlayer spacing. Therefore, titania nanosheets in the invention of this application are supposed to be compounds analogous to them or a mixture of them.

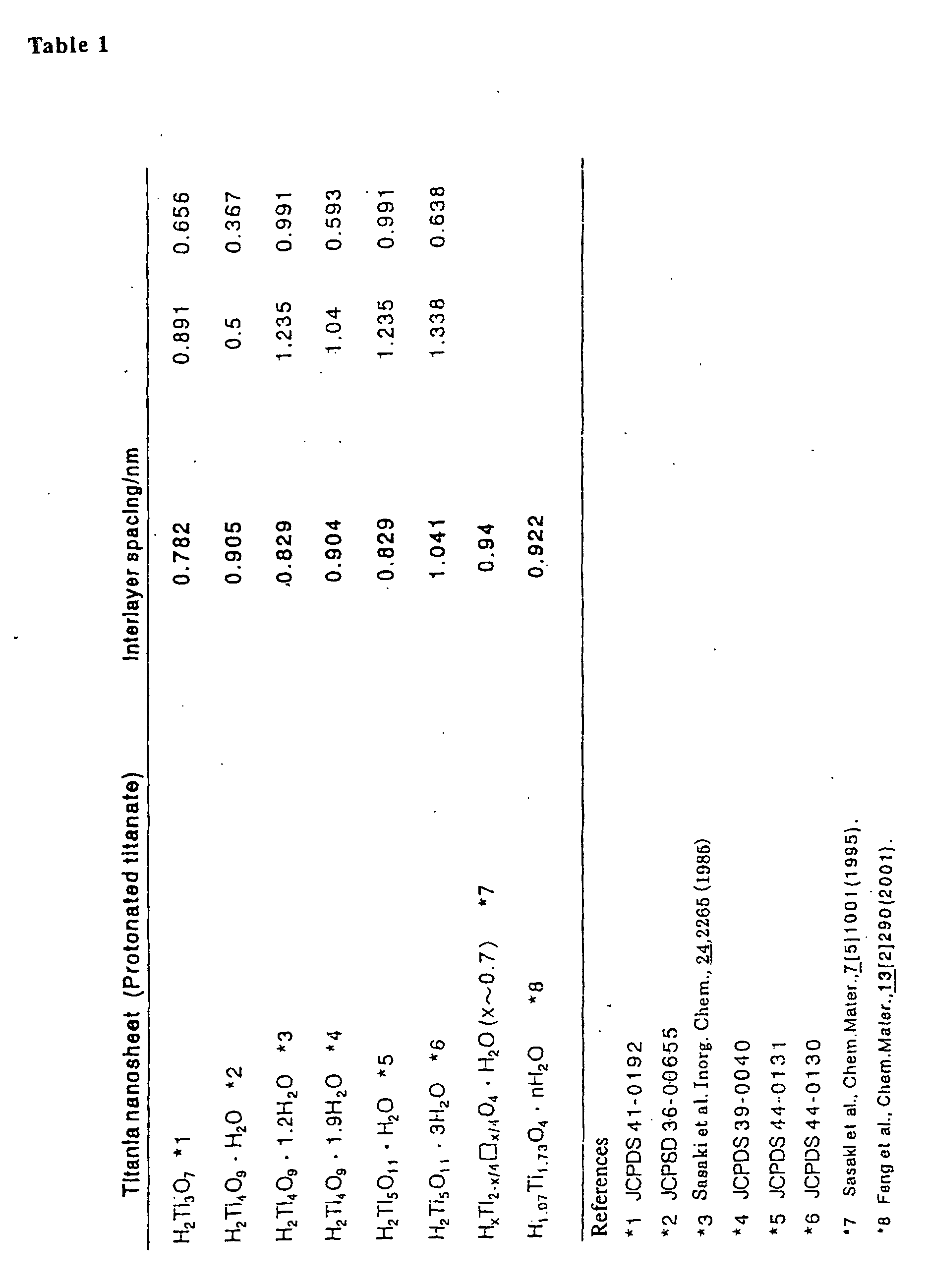

The titania nanosheet alignment thin film (1) of the invention of this application is characterized in that titania nanosheets (2) are not accumulated parallel to the surface of the thin film (1) but dispersed rising with certain angle at least at the surface portion of the thin film (1). The titania nanosheets (2) may be dispersed with low density partially or totally on the surface of the thin film (1), and in more preferable embodiments of the invention of this application, a titania nanosheet alignment thin film (1) is realized in which titania nanosheets (2) are highly dispersed on the whole surface of the thin film (1). In the invention of this application, the expression "highly dispersed" means that in general, 30% or more, further preferably 50% or more, or approximately 100% as realizable proportion of the surface area of the surface of the thin film (1) is recognized to be made of titania nanosheets (2).

The titania nanosheet alignment thin film (1) of the invention of this application as described above is characterized in that it shows a photocatalytic activity since titania nanosheets (2) are dispersed on the surface thereof. This titania nanosheet (2) has sufficiently larger surface area than that of a titania fine crystal (4) in a conventional thin film (1) on which titania fine crystals (4) are dispersed as exemplified in Example 10, therefore, also the photocatalytic activity of the titania nanosheet alignment thin film (1) of the invention of this application is enhanced higher than a thin film (1) on which titania fine crystals (4) are dispersed.

In the titania nanosheet alignment thin film (1) of the invention of this application, titania nanosheets (2) dispersed on its surface form irregular structures totally fine on the surface of the thin film (1). This irregular structure is sufficiently small for the wavelength of light, and scarcely causes light scattering as compared with a titania fine crystal (4), therefore, the thin film is characterized in that it has high transparency, shows excellent design, and manifests an ultrahydrophilic property of a contact angle against water of 5° or less. Further, this ultrahydrophilic property can be realized so that, for example, lower contact angles of 10° or less after retention for 1000 hours in a dark place in air, further, around 10° even after retention for 2000 hours in a dark place in air are maintained, and an ultrahydrophilic property is shown for so prolonged period of time as not conventionally observed.

Additionally, as the index of this hydrophilicity, an anti-fogging property owned by the titania nanosheet (2) alignment thin film (1) of the invention of this application can be mentioned. This titania nanosheet alignment thin film (1) has also such an excellent anti-fogging property that little fogging is caused by a breath even after retention for 2000 hours in a dark place in air, and fogging does not occur even exposed on hot water of about 50°C, and the like.

Further, the titania nanosheet alignment thin film (1) of the invention of this application can be expected to manifest some novel functions since titania nanosheets (2) form a layer structure.

In such a titania nanosheet (2) alignment thin film (1) of the invention of this application, the compounding ratio of silica to titania can be regulated in a wider range of SiO₂:TiO₂ = 5:1 to 1:3 in molar ratio. By this, the photocatalytic activity of the above-mentioned titania nanosheet (2) alignment thin film (1) of the invention of this application is enhanced, leading to high photocatalytic activity and ultrahydrophilic property. Regarding this compounding ratio of silica to titania, SiO₂:TiO₂ = 3:1 and those around this can be shown as preferable examples, more limitedly. By this, further enhanced photocatalytic activity and ultrahydrophilic property of this titania nanosheet alignment thin film (1) can be provided.

The titania nanosheet (2) alignment thin film (1) of the invention of this application as described above can be variously applied, for example, as an ultrahydrophilic coating thin film, highly photocatalytically active coating thin film and the like. An article provided by the invention of this application is characterized in that it includes the above-mentioned titania nanosheet (2) alignment thin film (1) of the invention of this application. More specifically, by mounting the titania nanosheet alignment thin film (1) of the invention of this application on an optional product as a base material (3), a stain-proof function, anti-fogging function, function of photo-decomposing water, organic substances and the like, function of photo-decomposing air pollution substances such as nitrogen oxides and the like, sterilizing and antimicrobial actions against harmful microorganisms, and the like can be imparted to the product. Regarding mounting of this titania nanosheet (2) alignment thin film (1) on a base material (3), a titania nanosheet(2) alignment thin film (1) may be directly produced on the surface of an optional product as a base material (3), or a titania nanosheet (2) alignment thin film (1) previously produced may be adhered to the surface of an optionally product, as described later.

The titania nanosheet alignment thin film of the invention of this application as described above can be produced by the process for producing a titania nanosheet alignment thin film of the invention of this application. Namely, the process for producing a titania nanosheet alignment thin film provided by the invention of this application is characterized in that from a solution containing a silicon alkoxide and a titanium compound having a hydrolysis property, a gel film containing a complex metal oxide or hydroxide of the titanium compound and silicon alkoxide is formed, and vibration warm water treatment of contacting warm water and applying vibration is performed on this gel film, to align and deposit titania nanosheets of layer structure having a nanometer order size on the surface thereof.

Apart from the vibration warm water treatment method, the invention of this application provides also a process for producing a titania nanosheet alignment thin film, wherein from a solution containing a silicon alkoxide and a titanium compound having a hydrolysis property, a gel film containing a complex oxide or hydroxide of the titanium compound and silicon alkoxide is formed, and electric field warm water treatment of contacting warm water and applying voltage is performed on this gel film, to align and deposit titania nanosheets of layer structure having a nanometer order size on the surface thereof.

In these production processes of the invention of this application, various compounds represented by, for example, the general formula Si(OR)₄ can be used as the silicon alkoxide as a starting substance. Here, examples of an organic group R constituting an alkoxyl group OR include the same or different lower alkyl groups having 1 to 6 carbon atoms such as a methyl group, ethyl group, propyl group, isopropyl group, butyl group, isobutyl group and the like. More specifically, silicon tetraethoxide is mentioned as a suitable example.

A silicon alkoxide is dissolved in an organic solvent to prepare a silicon alkoxide solution. In this procedure, if necessary, a catalyst and water may be added for promoting hydrolysis of an alkoxyl group and promoting a dehydration condensation reaction. It is preferable that the molar ratios of an organic solvent and water added to a silicon alkoxide are about 1 to 8 and about 1 to 6, respectively.

Examples of the organic solvent include methanol, ethanol, 1-propanol, isopropyl alcohol, 1-butanol, 2-butanol, isobutyl alcohol, tert-butyl alcohol, 1-pentanol, 2-pentanol, 3-pentanol and the like.

Examples of the catalyst include nitric acid, hydrochloric acid, sulfuric acid, phosphoric acid, acetic acid, ammonia and the like.

As the titanium compound having a hydrolysis property as a starting substance, titanium alkoxide and titanium oxalate as a metal organic compound, and titanium nitrate, titanium tetrachloride and the like as a metal inorganic compound, can be used, as examples, and of them, a titanium alkoxide is preferably used. Examples of the titanium alkoxide include tetramethoxytitanium, tetraethoxytitanium, tetra-n-propoxytitanium, tetraisopropoxytitanium, tetra-n-butoxytitanium, tetraisobutoxytitanium and the like.

Also the titanium compound is dissolved in the same organic solvent as described above, to prepare a titanium solution. The amount of the organic solvent added to the titanium compound is preferably about 20 in molar ratio.

The silicon alkoxide solution and titanium solution prepared as described above are mixed, and a gel film containing a complex metal oxide or hydroxide of a titanium compound and a silicon alkoxide is formed. The compounding ratio of a silicon alkoxide to a titanium compound can be regulated to be SiO₂:TiO₂ = 5:1 to 1:3, more preferably about 3:1, in molar ratio, as described above. When the molar ratio of a titanium compound to a silicon alkoxide is about 3:1, the photocatalytic activity of the resulting titania nanosheet alignment thin film of the invention of this application can be enhanced.

The gel film can be formed on base materials made of various materials. The base material can be made of various glass materials, metal material, inorganic materials, plastic materials, paper, wood materials and the like. In the process of the invention of this application, organic polymers and organism tissue, for example, and the like can be used as a base material since a titania nanosheet alignment thin film is produced under a mild condition of 100°C or less, as described later. For this base material, all or part of articles including a titania nanosheet alignment thin film of the invention of this application can also be used. As the method of applying on a base material, various methods such as a dip coating method, spray method, spin coating method and the like can be utilized, as described above.

The process of the invention of this application is characterized in that, subsequently, vibration warm water treatment of contacting warm water and applying vibration or electric field warm water treatment of applying voltage is performed on this gel film. By this treatment, titania nanosheets of layer structure having a nanometer order size can be aligned and deposited on the surface thereof. Here, aligning deposition can be understood as a condition necessary not for formation of particles of titania and deposition thereof, but for formation of a layer structure and deposition from the film surface with certain angle. Though it is not clear which mechanism is correlated with induction of align and deposition by the warm water treatment by vibration or electric field of the invention of this application, it is guessed that this vibration or electric field warm water treatment promotes a tendency of growth of fine crystals toward stable surface energy.

Regarding vibration applied to this gel film, it is considered to apply various vibration forms by various methods. For example, regarding vibration form, it may be permissible that pulse-like vibration having an interval, continuous vibration such as wave, and the like is added directly to a gel film or added to a base plate, further, added via a water in contact therewith. Further, the direction of this vibration is not particularly restricted, and horizontal direction or vertical direction to the surface of a gel film may be used, and ellipse vibration and various combinations thereof may be used, providing they essentially impart vibration to a gel film. In the invention of this application, contact with warm water while imparting continuously vibration to a gel film is preferable, further, imparting vibration along the normal line of the surface of a gel film is preferable, for aligning and depositing titania nanosheets more uniformly and more efficiently.

Though the size of this vibration cannot be generally discussed since it varies depending on the composition of a gel film and the like, imparting vibration of a rate of about 30 mm/second or more is used as one standard. This vibration of a rate of 30 mm/second or more can be, more specifically, regulated depending on apparatus environments such as, for example, an amplitude of 5 mm 90 times/minute or more, and the like, for vibration at an amplitude of 2.5 mm 180 time/minute or more. When this frequency is too small, an effect of vibration is not obtained and titania nanosheets cannot be deposited, and in contrast, too large frequency such as, for example, ultrasonic vibration is not adequate. In the invention of this application, when the amplitude is for example 2.5 mm, it is suitable to impart vibration of a frequency of 5 to 10 Hz (300 to 600 times/minute).

The electric field warm water treatment by application of voltage can also be conducted in various embodiments. Under a condition of immersion into warm water, for example, an electric field may be formed by applying direct voltage to facing positive and negative electrodes, alternatively a current electric field may be formed. Actually, an efficacy is higher in the case of direct electric field, in general. Of course, it is not limited to them.

The size of voltage applied can be determined in view of a distance of faced base plates, condition of a gel film, and the like.

In any of the vibration warm water treatment and electric field warm water treatment, the temperature of warm water can be 100°C or less, further from about room temperature to 100°C or less, more limitedly, the range from about 50 to 100°C is preferable. More efficiently, warm water of about 90 to 100°C can be used.

The treatment time of the warm water treatment can be arbitrary determined though it varies depending on the composition of a gel film, the temperature of warm water, further, size of vibration and electric field applied, and the like, and it can be regulated so that titania nanosheets aligned and deposited on the surface of the resulting thin film show desired amount and dispersed condition. For example, in the case of alignment and deposition of titania nanosheets at high density on the whole surface of a thin film, warm water treatment for 2 hours or more is preferable as approximate its standard. When the time of the warm water treatment is less than 2 hours, it is guessed that titania nanosheets are not aligned and deposited at sufficient high density, and titania nanosheets do not grow to sufficient size.

By this, a novel titania nanosheet alignment thin film capable of maintaining an excellent ultrahydrophilic property for a prolonged period of time can be produced. An article including this titania nanosheet alignment thin film can be produced by directly producing this titania nanosheet alignment thin film on the surface of all or part of any product as a base material, or adhering a titania nanosheet alignment thin film produced previously on the surface of any product by some means, and the like.

Examples are shown below referring to appended drawings, and embodiments of the present invention will be illustrated further in detail.

### EXAMPLES

### (Example 1)

To a mixed solution composed of tetraethoxysilane, ethanol and water was added 3.6 wt% of hydrochloric acid and they were hydrolyzed for 30 minutes, then, an ethanol solution of tetra-n-butoxytitanium was added and the mixture was stirred for 30 minutes, to obtain a composition in the form of sol. Here, the mixing ratio of tetraethoxysilane, ethanol and water was 1:5:4 in molar ratio, and the mixing ratio of tetra-n-butoxytitanium and ethanol was 1:20 in molar ratio. The mixing ratio of the mixed solution and the ethanol solution of tetra-n-butoxytitanium was SiO₂:TiO₂ = 75:25 by molar ratio.

This composition in the form of sol was applied on the surface of a silicon water and non-alkali glass base plate by a dip coating method at a lifting speed of 3.03 mm/sec, and dried at 90°C for 1 hour, to produce a 75SiO₂·25TiO₂ gel film.

Then, this gel film was immersed together with the base plate into warm water of 90°C, and warm water treatment was performed for about 2 hours while vibrating this along a direction vertical to the base plate (amplitude: 2.5 mm, frequency: 360 times/min). By this, a transparent thin film having a thickness of about 100 nm was obtained.

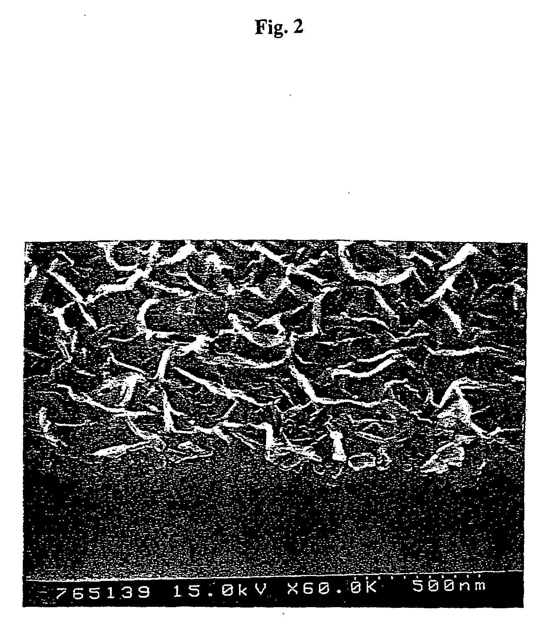

The section of this transparent thin film was observed by a scanning electron microscope (SEM), and an perspective view of the section is exemplified in Fig. 2. By SEM, it was observed that titania nanosheets of nanometer size of about 100 nm were aligned and deposited at high density on the whole surface of this transparent thin film. In this case, it was necessary to perform vibration warm water treatment for 2 hours or more, for depositing titania nanosheet fine crystals on the whole surface of the transparent thin film.

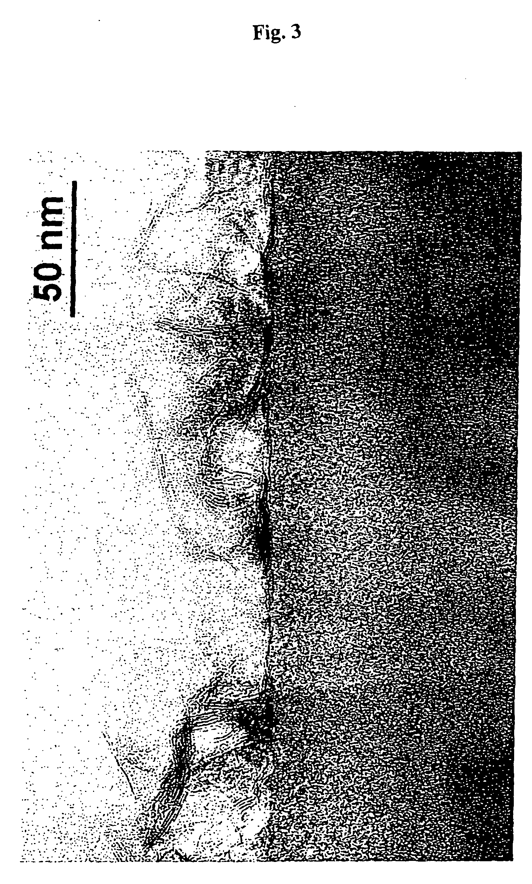

This transparent thin film was observed by a high resolution transmission electron microscope (HRTEM), and its sectional view is exemplified in Fig. 3. It was confirmed that titania nanosheet fine crystals were aligned and deposited at high density on the base plate as if they were growing and extending from the base plate. It was also confirmed that the titania nanosheet fine crystals formed layer tissue having an inter-layer spacing of about 0.7 nm.

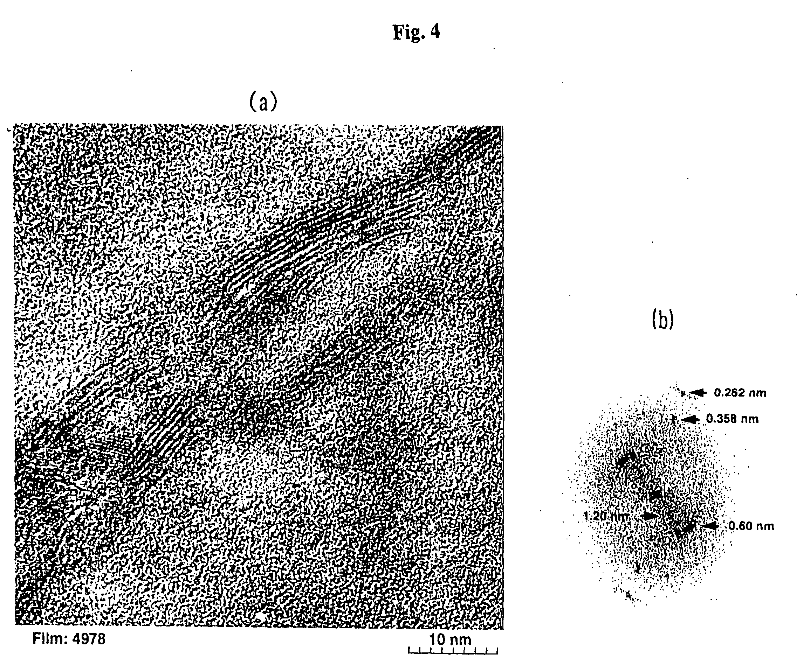

This transparent thin film was observed further at high magnification, and Fig. 4 exemplifies (a) a HRTEM image, and (b) results of analysis of lattice fringes of this image via Fourier transformation. The titania nanosheet fine crystals (a) had an inter-layer spacing of about 0.6 nm, and spots of 0.6 nm characteristic to this titania nanosheet fine crystal not observed in titania of anatase phase, rutile phase and brookite phase appeared clearly in the results (b). Further, also spots of 1.2 nm corresponding to twice of them were observed.

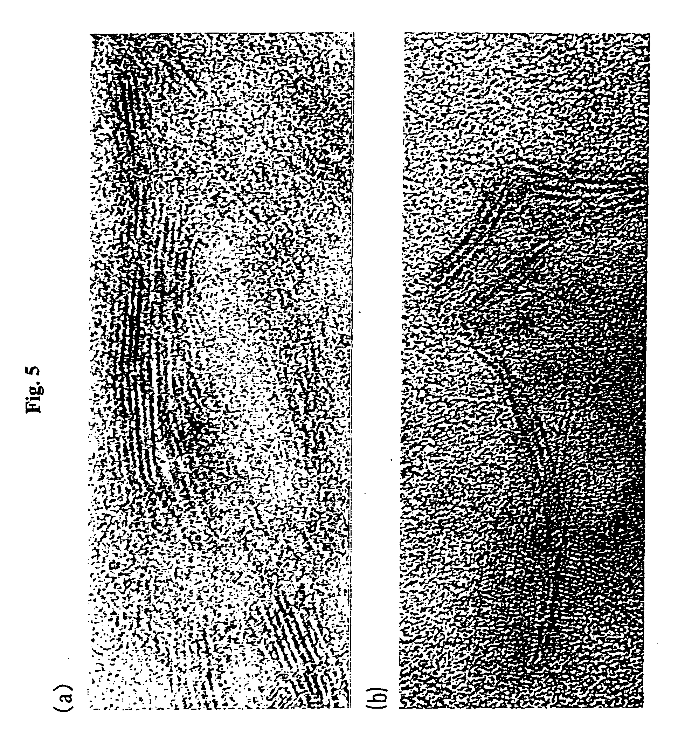

Results of observation of another titania nanosheets on this transparent thin film are exemplified in Figs. 5 (a), (b). A titania nanosheet shown in (a) had an interlayer spacing of about 0.60 to 0.63 nm, while a titania nanosheet fine crystal shown in (b) had an interlayer spacing of about 0.82 nm.

Thus, it was confirmed that titania nanosheets aligned at high density in layer tissue having an interlayer spacing of about 0.6 nm to 0.85 nm were present on the titania nanosheet alignment transparent thin film of the invention of this application.

### (Comparative Example 1)

A 75SiO₂·25TiO₂ gel film was produced in the same manner as in the example. This gel film was immersed together with the base plate in warm water of 90°C, fixed completely so that the base plate did not vibrate, and warm water treatment was performed for about 2 hours. On this transparent thin film obtained by warm water treatment without vibration, titania nanosheets having an interlayer spacing of about 0.7 nm were not obtained, and deposition of titania nano fine crystals of anatase phase in the form of granules having a diameter of about decades of nm as already reported, on the whole surface of the thin film was observed.

### (Comparative Example 2)

A TiO₂ gel was produced using tetra-n-butoxytitanium as a starting material, ethanol as a solvent, and hydrochloric acid as a hydrolysis catalyst, and this gel was applied on a silicon wafer and non-alkali glass base plate by a dip coating method to obtain a 100 % TiO₂ gel film.

On this TiO₂ gel film, heat treatment was performed at 500°C for 1 hour. The TiO₂ film after heat treatment was subjected to measurement of X-ray diffraction and TEM observation, to confirm that approximately all of the TiO₂ film was titania of anatase phase. On the surface of this TiO₂ film, deposition of titania nanosheet fine crystals having an interlayer spacing of about 0.7 nm and titania nano fine crystals of anatase phase in the form of granule having a diameter of about decades nm, and the like was not observed, confirming approximately smooth plat surface.

### (Example 2)

Water contact angle and photocatalytic activity were checked on the same titania nanosheet alignment thin film (A) of the invention of this application as in Example 1, the same titania nano fine crystal dispersed thin film (B) as in Comparative Example 1, and the same anatase phase titania crystal thin film (C) as in Comparative Example 2.

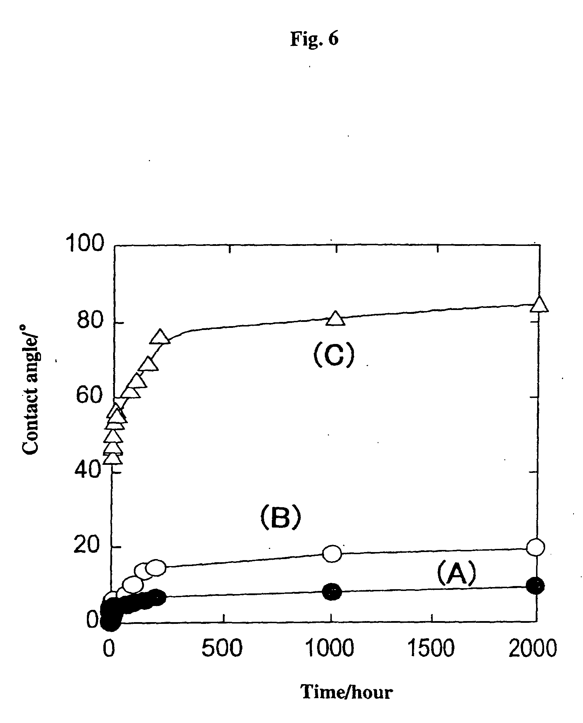

First, these three kinds of thin films (A), (B) and (C) were produced, and kept in a dark place in air directly after production, and change with the lapse of time in water contact angle was measured. The results are shown in Fig. 6.

It was found that the contact angle of the anatase phase titania crystal thin film (C) was originally as large as 42° , and by adsorption of organic substances in air, the contact angle increased up to about 80° after hundreds hours.

On the other hand, the titania nanosheet alignment transparent thin film (A) and titania nano fine crystal dispersed thin film (B) produced by treatment using warm water had a contact angle of as small as 5° directly after production, and both the films showed small change with the lapse of time in contact angle as compared with the anatase phase titania crystal thin film (C). Particularly, the titania nanosheet alignment transparent thin film (A) of the invention of this application showed a water contact angle of 10° or less even after 1000 hours in a dark place in air, and a water contact angle of about 10° even after 2000 hours, confirming an excellent property maintaining an ultrahydrophilic property for a prolonged period of time. Further, it was shown that this titania nanosheet alignment transparent thin film (A) after retention for 2000 hours in a dark place in air caused little fogging by a breath, and fogging did not occur even exposed on hot water of about 50°C, teaching an excellent anti-fogging property.

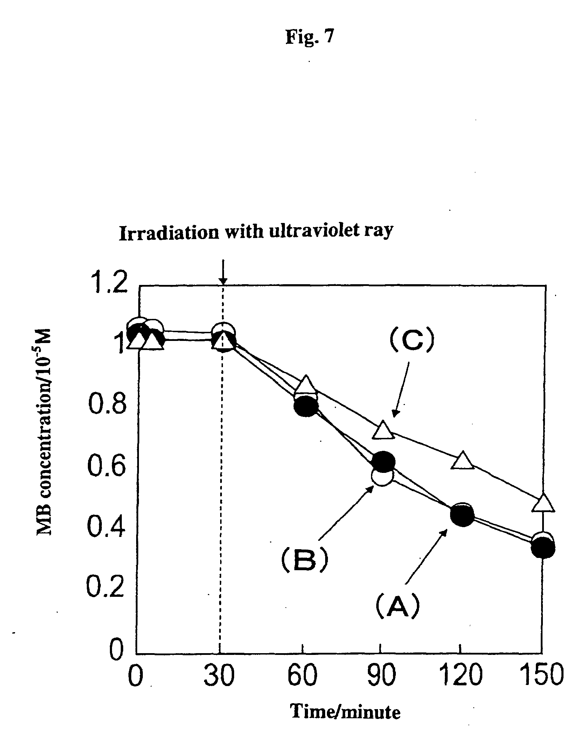

These three kinds of thin films (A), (B) and (C) were immersed together with the base plate in a methylene blue (MB) aqueous solution, and irradiated with ultraviolet ray using a superhigh pressure mercury lamp, and change in the concentration of MB in this operation is shown. The results are shown in Fig. 7. The thickness of the thin films (A), (B) and (C) used was 80 to 100 nm, the surface area thereof was the same, and the illumination of ultraviolet ray was set at 58 mW/cm⁻¹. Irradiation with ultraviolet ray was initiated 30 minutes after immersion of the thin film.

It was confirmed that in any case of the thin films (A), (B) and (C), MB was decomposed by the photocatalytic action of titania, and the concentration of MB decreased. It was confirmed that though the photo-decomposing abilities of the titania nanosheet alignment transparent thin film (A) and the titania nano fine crystal dispersed thin film (B) were at the same level, these were higher by about 30% as compared with the anatase phase titania crystal thin film (C). This is remarkable in view of a titania content of 25% of the titania nanosheet alignment transparent thin film (A) and the anatase phase titania nano fine crystal dispersed thin film (B), significantly smaller than a titania content of 100% of the anatase phase titania crystal thin film (C), teaching an excellent photocatalytic activity.

### (Example 3)

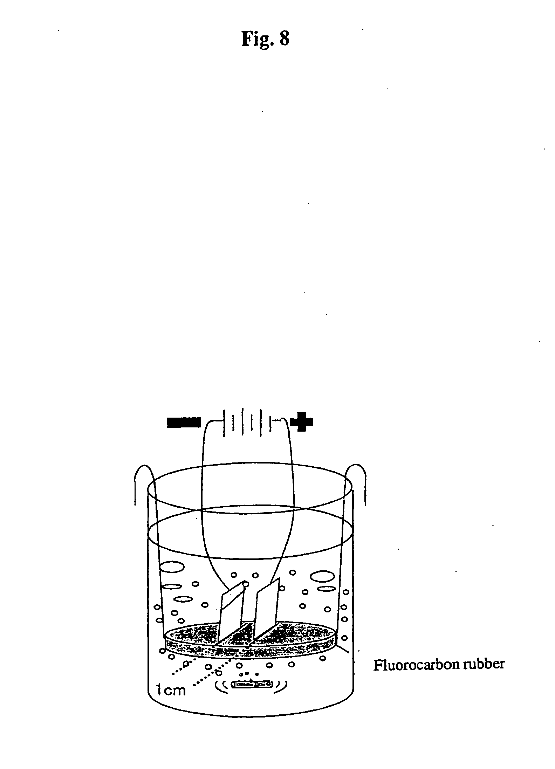

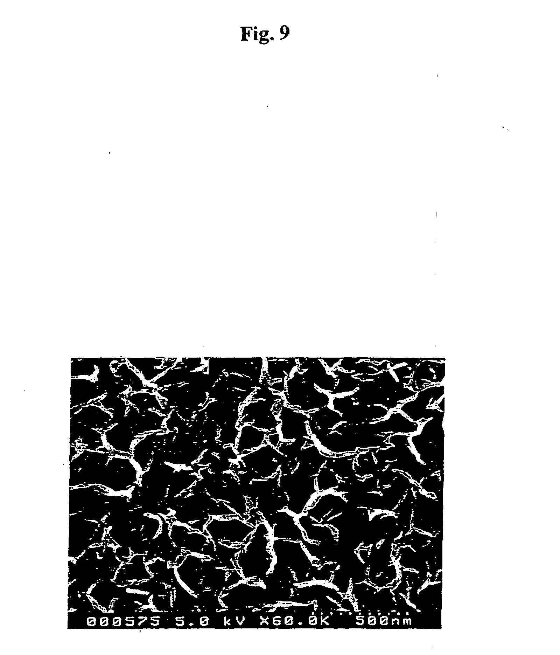

According to the same procedure as in Example 1, a composition in the form of sol was prepared, and a 75SiO₂•25TiO₂ gel film (mol %) was produced on a non-alkali glass base plate including an indium-tin oxide (ITO) transparent conductive thin film. Then, as shown in Fig. 8, two of the gel film/ITO/glass base plate were allowed to face in parallel condition at an interval of 1 cm so that the film surfaces of both the base plates faced, further, current voltage of 2.5 V was applied on both the base plates and kept in boiling water for 3 hours. As a result, it was found that an effect analogous to the vibration warm water treatment in Example 1 was manifested on a gel film formed on a base plate of the negative electrode side. The SEM observation results are shown in Fig. 9. Like in the case of the vibration warm water treatment, production of a titania nanosheet was found. From the results of measurement of electric diffraction, it was confirmed that layer tissue having an inter-layer spacing of about 0.7 nm was formed also on these nanosheets, as a result of analysis.

In warm water treatment, components of a gel film are dissolved usually in the form of oxide or hydroxide negatively charged. Therefore, it is guessed that on a gel film at the negative electrode side, diffusion and elution of components on the surface are promoted. This effect is analogous to an effect of promoting diffusion and elution of components of a gel film, in addition to suitable vibration in warm water treatment. Namely, it is guessed that conditions for suitable promotion of diffusion and elution of component of a gel film in warm water treatment are important factors for production of the titania nanosheet thin film of the invention of this application.

Under the conditions of this example, production of titania nanosheets was scarcely observed on the positive electrode side. Under the conditions of this example, when the voltage applied was less than 1 V, deposition of titania nanosheets was not clear. On the other hand, also when the voltage applied was 3V and 5V, approximately the same effect as in the case of 2.5V was obtained, and when the voltage was raised up to as high as 10V, the film darken to suggest occurrence of reduction of Ti. Further, it was confirmed that also the current electric field promoted deposition of analogous titania nanosheets.

Also in the case of electric field warm water treatment, the gel film composition for obtaining an effect is not limited to the case of 75SiO₂•25TiO₂, but relatively wider ranges of SiO₂:TiO₂, = 5:1 to 1:3 are preferable, like in the case of vibration warm water treatment.

Of course, the present invention is not limited to the above-mentioned examples, and it is needless to say that various embodiments are possible in detailed portions.

### INDUSTRIAL APPLICABILITY

As described in detail above, the present invention provides a novel titania nanosheet alignment thin film which not only exhibits high photocatalytic activity but also can maintain excellent ultrahydrophilic and anti-fogging properties for a prolonged period of time, a process for producing the same, and an article including the titania nanosheet alignment thin film.

## Claims

1. A titania nanosheet alignment thin film whose main components are silica and titania, wherein titania nanosheets of layer structure having a nanometer order size are dispersed on the surface thereof.

2. The titania nanosheet alignment thin film according to claim 1, wherein the interlayer spacing of the titania nanosheet is 0.6 to 0.85 nm.

3. The titania nanosheet alignment thin film according to claim 1 or 2, wherein the interlayer spacing of the titania nanosheet is 0.7 nm or around 0.7 nm.

4. The titania nanosheet alignment thin film according to any one of claims 1 to 3, wherein the titania nanosheets are highly-dispersed on the whole surface.

5. The titania nanosheet alignment thin film according to any one of claims 1 to 4, wherein the compounding ratio of silica to titania is SiO₂:TiO₂ = 5:1 to 1:3 in molar ratio.

6. The titania nanosheet alignment thin film according to any one of claims 1 to 5, wherein the compounding ratio of silica to titania is SiO₂:TiO₂ = 3:1 in molar ratio.

7. The titania nanosheet alignment thin film according to any one of claims 1 to 6, wherein the film shows an ultrahydrophilic property of a contact angle against water of 5° or less.

8. The titania nanosheet alignment thin film according to any one of claims 1 to 7, wherein the film shows an anti-fogging property.

9. The titania nanosheet alignment thin film according to any one of claims 1 to 8, wherein the contact angle against water is 10° or less after retention of 1000 hours in a dark place in air.

10. The titania nanosheet alignment thin film according to any one of claims 1 to 9, wherein the film shows a photocatalytic activity.

11. An article including a titania nanosheet alignment thin film according to any one of claims 1 to 10.

12. A process for producing a titania nanosheet alignment thin film, wherein from a solution containing a silicon alkoxide and a titanium compound having a hydrolysis property, a gel film containing a complex metal oxide or hydroxide of the titanium compound and silicon alkoxide is formed, and vibration warm water treatment of contacting warm water and applying vibration is performed on this gel film, to align and deposit titania nanosheets of layer structure having a nanometer order size on the surface thereof.

13. A process for producing a titania nanosheet alignment thin film, wherein from a solution containing a silicon alkoxide and a titanium compound having a hydrolysis property, a gel film containing a complex oxide or hydroxide of the titanium compound and silicon alkoxide is formed, and electric field warm water treatment of contacting warm water and applying voltage is performed on this gel film, to align and deposit titania nanosheets of layer structure having a nanometer order size on the surface thereof.

14. The process for producing a titania nanosheet alignment thin film according to claim 12 or 13, wherein the titanium compound having a hydrolysis property is a titanium alkoxide.

15. The process for producing a titania nanosheet alignment thin film according to any one of claims 12 to 14, wherein the compounding ratio of the silicon alkoxide to the titanium compound is SiO₂:TiO₂ = 5:1 to 1:3 in molar ratio.

16. The process for producing a titania nanosheet alignment thin film according to any one of claims 12 to 15, wherein the compounding ratio of the silicon alkoxide to the titanium compound is SiO₂:TiO₂ = 3:1 in molar ratio.

17. The process for producing a titania nanosheet alignment thin film according to any one of claims 12 to 16, wherein the gel film is formed on a base plate.

18. The process for producing a titania nanosheet alignment thin film according to claim 12, wherein the gel film is contacted with warm water while imparting continuous vibration to the gel film.

19. The process for producing a titania nanosheet alignment thin film according to claim 12, wherein vibration is imparted along the normal line direction on the surface of the gel film.

20. The process for producing a titania nanosheet alignment thin film according to claim 12, wherein vibration is imparted at a rate of 30 mm/second or more.

21. The process for producing a titania nanosheet alignment thin film according to claim 20, wherein vibration of 5 to 10 Hz is imparted at an amplitude of 2.5 mm.

22. The process for producing a titania nanosheet alignment thin film according to claim 13, wherein direct current voltage is applied.

23. The process for producing a titania nanosheet alignment thin film according to any one of claims 12 to 22, wherein warm water of 90°C to 100°C is used for the warm water treatment.

24. The process for producing a titania nanosheet alignment thin film according to any one of claims 12 to 23, wherein the warm water treatment is performed for 2 hours or more.
